**Europäisches Patentamt**

**European Patent Office**

**Office européen des brevets**

(19)

(11) Veröffentlichungsnummer: **0 111 044**
**B1**

(12) # EUROPÄISCHE PATENTSCHRIFT

(45) Veröffentlichungstag der Patentschrift:.
**26.10.88**

(51) Int. Cl.⁴: **H 01 S  3/03,** H 01 S  3/045,
H 01 S  3/07

(21) Anmeldenummer: **83105117.2**

(22) Anmeldetag: **24.05.83**

(54) **Laseranordnung.**

(30) Priorität: **11.12.82  DE 3245958**

(43) Veröffentlichungstag der Anmeldung:
**20.06.84 Patentblatt 84/25**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**EP - A - 0 015 003**
**EP - A - 0 065 761**
**US - A - 4 099 143**

(73) Patentinhaber: **TZN Forschungs- und
Entwicklungszentrum Unterlüss GmbH,
Neuensothrither Strasse 20, 3104 Unterlüss (DE)**

(72) Erfinder: **Gürs, Karl, Prof. Dr., Weissdornweg 23,
D-6236 Eschborn 2 (DE)**

(74) Vertreter: **Podszus, Burghart, Dipl.-Phys., Rheinmetall
GmbH Ulmenstrasse 125 Postfach 6609,
D-4000 Düsseldorf (DE)**

**Beschreibung**

Die Erfindung betrifft eine Laseranordnung nach dem Gastransport-Prinzip, mit schneller longitudinaler Gasströmung.

Leistung, Verstärkung und Wirkungsgrad der Moleküllaser, insbesondere der $CO_2$-Laser, nehmen mit steigender Temperatur im Lasergas ab. Die Abnahme der Leistungsfähigkeit beruht darauf, dass mit zunehmender Temperatur die Linienbreite grösser wird, die Anregungsenergie sich auf eine zunehmende Zahl von Rotationslinien verteilt, die Zahl der desaktivierenden Stösse zunimmt und die Besetzung des Laserendniveaus durch thermische Anregung zunimmt und damit die Inversion abnimmt (K. Gürs, «Laser 74 Optoelectronics», Conference proceedings, S. 30–37).

Aus diesem Grund wurden bereits Methoden entwickelt, die Wärme mit dem Lasergas durch Umwälzen und Kühlen des Gases abführen. Geeignete Laser bestehen aus einem aktiven Bereich, in dem das Gas angeregt wird, mit angrenzendem oder integriertem optischen Resonator, aus dem Gasführungssystem mit eingebautem Kühler und einer Pumpe. Da grosse Wärmemengen abzuführen sind, müssen grosse Gasmengen umgepumpt werden. Die entsprechenden bekannten Laser sind gross und aufwendig, ihre Einsatzmöglichkeit ist wegen ihrer Unhandlichkeit begrenzt.

Dieser Nachteil tritt bei den longitudinal durchströmten Lasern besonders in Erscheinung, bei denen – in den bekannten Anordnungen – lange Gasleitungen erforderlich sind. Ausserdem verursachen diese Leitungen einen entsprechend hohen Strömungswiderstand. Dadurch sinkt die Leistungsfähigkeit des Systems, oder man benötigt besonders grosse Pumpen.

Bei den transversal durchströmten Systemen ist der Wechselwirkungsweg der angeregten aktiven Moleküle im Laserresonator relativ klein. Da die Leistungsdichte der Laser nicht weit über der Sättigungsleistung liegt, geht auf diese Weise Anregungsenergie verloren, und die Laser haben einen vergleichsweise kleinen Wirkungsgrad von z.B. weniger als ca. 10%. Ausserdem ist die transversale Anregung relativ inhomogen, wodurch sich ungünstige Strahleigenschaften ergeben.

Die angegebenen Nachteile der bekannten Gastransport- bzw. Konvektionslaser konnten bereits durch eine Anordnung beseitigt werden, bei der die Laserkammer als gekühltes Rohr ausgebildet und konzentrisch innerhalb einer Umwälzturbine angeordnet ist (DE-OS 3 121 372). Dadurch wird in der Tat bereits ein wesentlicher Fortschritt gegenüber herkömmlichen Gastransport-Lasern mit longitudinaler Gasströmung erzielt. Allerdings ist dieser Laser nur mit grossem technischem Aufwand zu realisieren. Besonders aufwendig und auch in der Serienproduktion teuer sind vier Komponenten und zwar

– die Lager. Wegen des grossen Durchmessers bei Aussenlagerung und der grossen Drehgeschwindigkeit ergibt sich eine sehr grosse Geschwindigkeit der bewegten gegen die stehenden Teile. Das Problem konnte durch Einsatz von Gaslagern gelöst werden.

– der Antrieb. Als schnellaufendes System (400 U/s) mit hohem Innenläufer stellt der Motor eine aufwendige Sonderkonstruktion dar.

– die Beschaufelung. Auch der Umwälzverdichter ist eine Sonderkonstruktion. Besonders ungewöhnlich und schwierig herzustellen ist das System der an einem rotierenden Aussenrohr befestigten Turbinenschaufeln. Auch die Verwendung von Radialverdichtern bringt wegen der damit verbundenen komplizierten Gasführung keine wesentliche Vereinfachung.

– das Kühlsystem. Die kreissymmetrische Bauweise und die Notwendigkeit einer grossen Kühlleistung machen auch diese Komponente zu einer aufwendigen Konstruktion.

Im übrigen werden in den bekannten Gastransportlasern Pumpen und Gebläse der verschiedensten Arten verwendet, z.B. Drehschieberpumpen, Roots-Gebläse (K. Gürs, «Laser 75, Opto-Electronics», Conference Proceedings, S. 30–37 oder H. Herbrich und B. Dellith, DE-OS 2 925 829), Querstromlüfter (J.D. Foster, US-PS 4 099 143) oder Radialgebläse (H.J. Seguin und G. Sedgwick, Appl. Optics 11, 1972, 745–748 oder K. Sasaki u.a., EP-A-0 015 003). In allen Fällen sind die verschiedenen Komponenten jeweils als Teilsysteme mit definierter Funktion getrennt zu identifizieren.

Der vorliegenden Erfindung liegt daher die Aufgabe zugrunde, eine besonders kompakt aufgebaute und leistungsfähige Laseranordnung zu entwickeln, bei der alle Funktionen voll integriert sind, so dass in Kombination mit einer bestimmten Gasführung sehr kurze Gaswege realisiert werden können.

Diese Aufgabe ist erfindungsgemäss dadurch gelöst, dass zur Gasumwälzung mindestens ein Gebläserad nach Art der Lauräder von Tangentialgebläsen mit angrenzendem Ringkanal vorgesehen ist, dass in den Ringkanal des Gebläserades mindestens zwei Längsrohre (Längskanäle) tangential münden und der Ringkanal zwischen den Längsrohren unterbrochen ist und dass der Ringkanal und die Längsrohre eine Kreislaufstrecke für das Lasergas bilden, wobei mindestens ein Längsrohr als Laserresonator ausgebildet ist. Vorteilhafte Weiterbildungen der erfindungsgemässen Laseranordnung sind in den Unteransprüchen 2 bis 14 erläutert.

Die Erfindung wird anhand beiliegender Zeichnung näher erläutert. Es zeigt in schematischer Vereinfachug

Fig. 1 bis 3 im Horizontal- und Vertikalschnitt, eine bevorzugte Ausführungsform der erfindungsgemässen Anordnung, bei der Ringkanäle sich oberhalb der Lauräder befinden;

Fig. 4 im Vertikalschnitt eine weitere Ausführungsform, bei der Schaufelräder zur Gasumwälzung vorgesehen sind;

Fig. 5 im Horizontalschnitt ein erfindungsgemässer Laser mit einem einzigen Laufrad zur Gasumwälzung;

Fig. 6 und 7 im Horizontal- und Vertikalschnitt eine weitere Ausführungsform, bei der ein in Richtung der Drehachse ausgedehntes Laufrad verwendet und somit ein Parallelschalten mehrerer Systeme ermöglicht wird und

Fig. 8 im Horizontalschnitt eine Ausführungsform, bei der zwei Anordnungen gemäss Fig. 6 und 7 spiegelbildlich zusammengefügt sind.

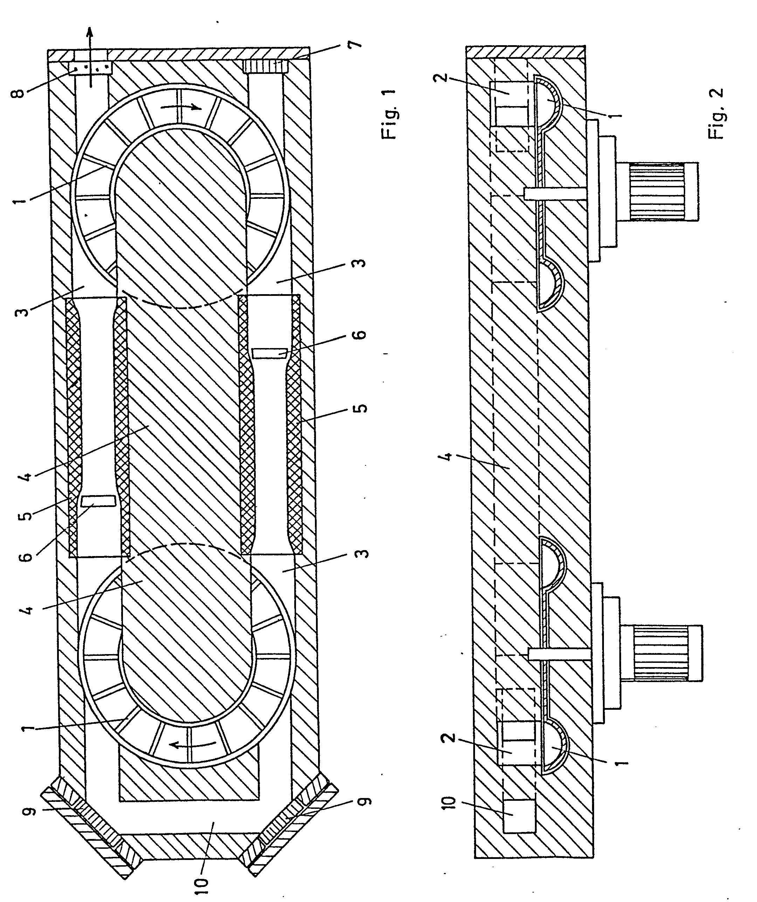

In dem in Fig. 1 und 2 dargestellten Ausführungsbeispiel bestehen die wesentlichen Teile des Systems aus zwei Laufrädern 1 von Seitenringkanalgebläsen, die sich wie angegeben in Pfeilrichtung drehen. Das Lasergas wird im Ringkanal 2 oberhalb der Laufräder mitbewegt. Der Ringkanal 2 mündet in zwei Längsrohre 3, die die beiden Kanäle 2 oberhalb der Laufräder tangential miteinander verbinden. Das Metall-Zwischenstück 4 zwischen den Laufrädern und den Längsrohren dient an der Einmündung der Laufräder als Abstreifer und lenkt das Gas aus dem Ringkanal 2 in die Längsrohre 3, die gleichzeitig als Laserrohre dienen. In dem isolierten Teilstück 5 der Längsrohre zwischen den Laufrädern wird das Lasergas angeregt; die Gasentladung brennt zwischen ringförmigen auf hoher Spannung liegenden Elektroden 6 im isolierten Rohr und dem auf Erdpotential liegenden Längsrohr auf der anderen Seite. Die Laserstrahlung läuft im Innern des Resonators von dem Endspiegel 7 über die Umlenkspiegel 9 zum Auskoppelspiegel 8 und umgekehrt, wobei der Kanal 10 eine Öffnung für den Strahlengang darstellt, ohne dass dort eine wesentliche Gasströmung auftritt.

Das ganze System kann mit Wasser gekühlt werden. Die Kühlfläche reicht bei glatten Strömungskanälen für eine Laserleistung von mehr als 200 W aus. Durch Einschneiden von Rillen in Längsrichtung in den Ringkanälen und den Längsrohren kann die Oberfläche und damit die Kühlfläche vergrössert und eine entsprechend höhere Laserleistung erreicht werden.

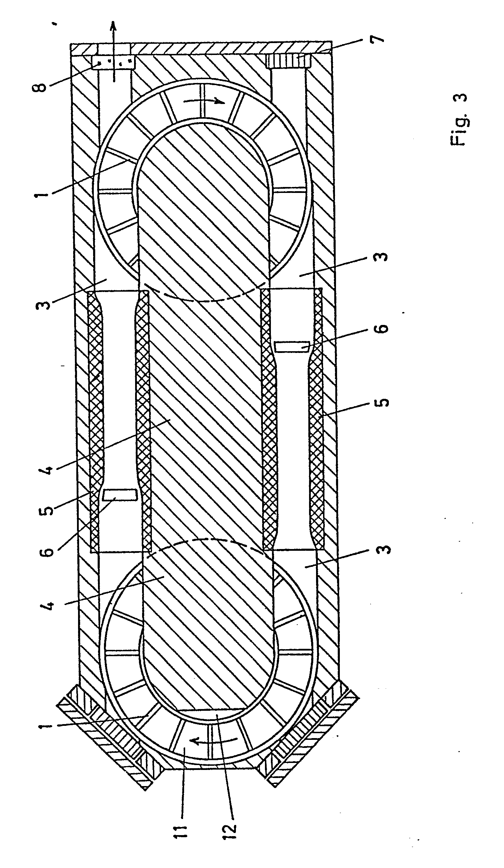

In einer zweiten in Fig. 3 gezeigten Version wird der Ringkanal 11 auf der Aussenseite mit einer Erweiterung 12 auf der Seite der betreffenden Drehachse versehen und gleichzeitig als Kanal für den Umlenkstrahlengang genutzt, so dass der zusätzliche Kanal 10, dargestellt in Fig. 1 und 2 entfallen kann.

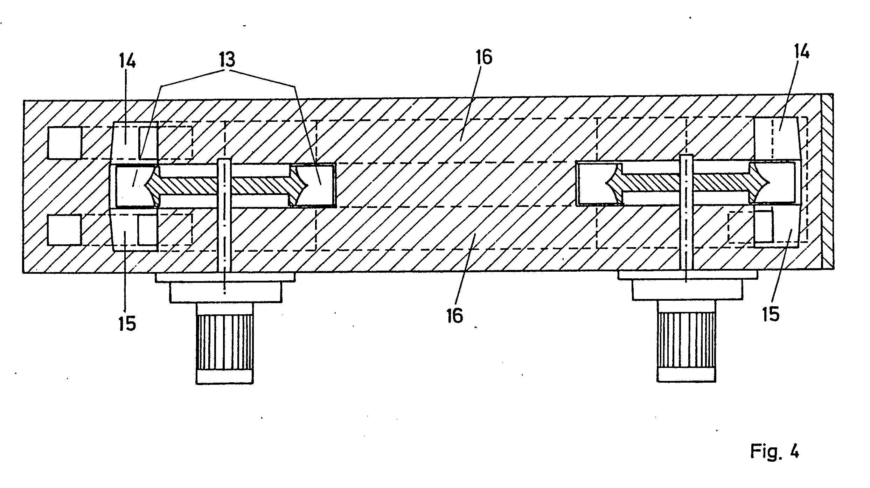

In Fig. 4 wird eine weitere, bei hoher Leistung bevorzugte Ausführungsform gezeigt, bei der Schaufelräder 13 als Laufräder eingesetzt werden. In diesem Fall können auf beiden Seiten der Laufräder 13, d.h. oberhalb und unterhalb Ringkanalsysteme 14 und 15 mit Längsrohren 16 nach Art von Fig. 1 bis 3 angeordnet werden. Das Gesamtsystem enthält dann vier Laserstrecken, und der Strahl muss von einer Ebene mit zwei Spiegeln in die andere Ebene umgelenkt werden.

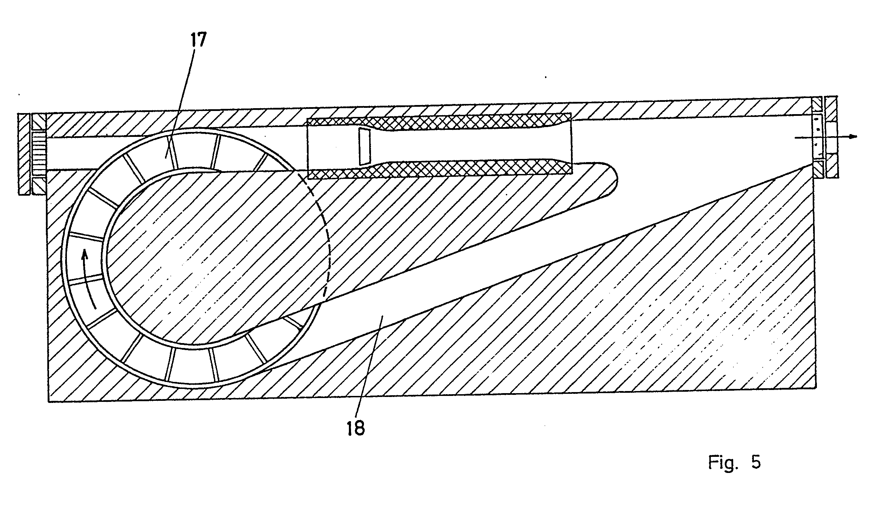

Eine besonders einfache Version wird in Fig. 5 dargestellt. Hierbei wird nur ein Laufrad 17 benötigt, und der Rücklaufkanal 18 wird zur besonders effizienten Kühlung des Lasergases genutzt.

Bei allen Ausführungsformen können Ringkanäle und Längsrohre mit einem vergleichsweise grossen Querschnitt ausgestattet werden, so dass die Strömungswiderstände sehr gering sind. Bei Laufrädern mit 40 cm Durchmesser und Drehgeschwindigkeiten von ca. 4000 U/min können pro Laserrohr annähernd 1000 m$^3$ Lasergas pro Stunde umgewälzt werden. Dem entspricht bei einem System mit vier Laserrohren eine Ausgangsleistung von mehr als 1 kW. Die Leistung lässt sich bis in den Multikilowatt-Bereich erhöhen, wenn man mit festeren Laufrädern (z.B. aus Titan) bei grösseren Drehgeschwindigkeiten arbeitet und mehrere Anordnungen durch Parallel- oder Hintereinanderschalten kombiniert.

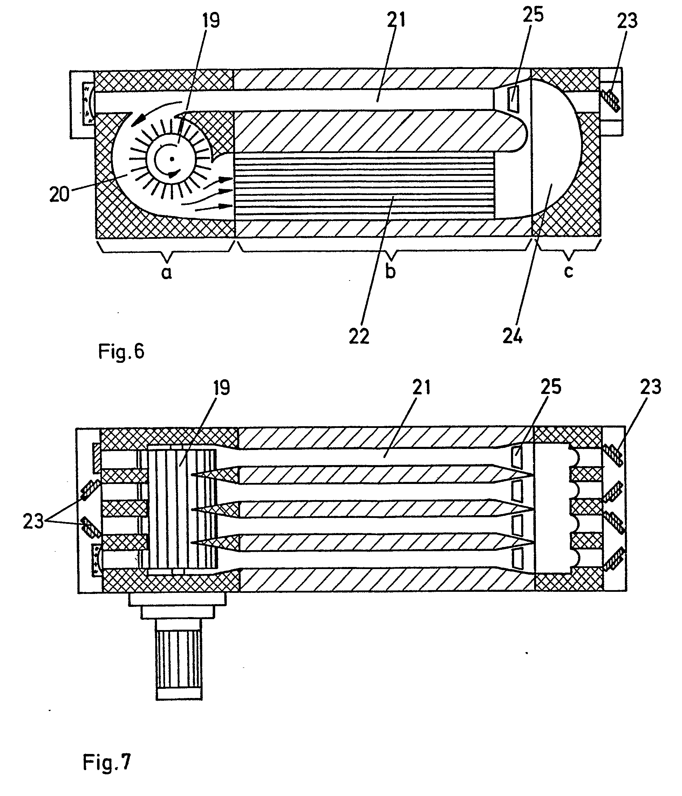

Das Parallelschalten kann in der Weise geschehen, dass man z.B. mehrere Laufräder jeweils auf eine Achse setzt. Das Parallelschalten wird bei der in Fig. 6 und 7 gezeigten Anordnung in der Weise realisiert, dass in Richtung der Achse ausgedehnte Laufräder 19 verwendet werden. In diesem Fall kommt als Ringkanal ein Aussenringkanal 20 in Betracht, und die Längsrohre 21, 22 erweitern sich zu breiten Kanälen. Allerdings hat sich als vorteilhaft erwiesen, die Längskanäle 21, 22 wieder in Laserrohre zu unterteilen. Durch Spiegel 23 wird die Strahlung von einem Rohr in das nächste umgelenkt.

In einer bevorzugten Ausführungsform kommen kleinere Laufräder mit hoher Drehzahl von 16 000 U/min oder mehr zur Verwendung. Das Lasergas wird nur auf einer Seite mit dem Laufrad 19 bewegt und auf der anderen Seite über einem halbkreisförmigen Kanal 24 in den Laserkanal 21 umgelenkt. Der Hinlaufkanal 22 ist erweitert und als Kühler ausgebildet. Am Anfang des Laserkanals sind die Elektroden 25 angeordnet. Fig. 6 zeigt einen Schnitt senkrecht durch die Drehachse des Laufrads, Fig. 7 einen Schnitt durch den Laserkanal.

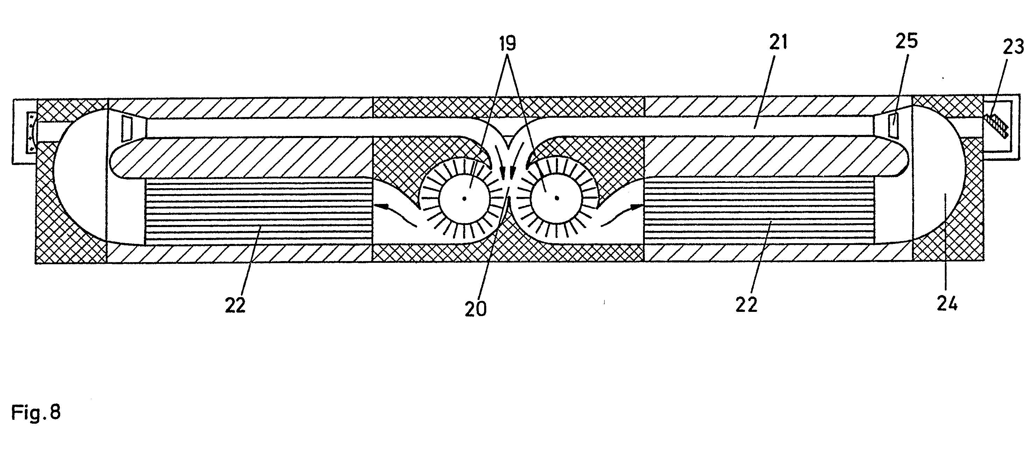

Eine Verdoppelung der Leistung mit Ausgangsleistungen bis in den Multikilowatt-Bereich lässt sich erzielen, wenn man zwei Anordnungen dieser Ausführungsform, wie in Fig. 8 dargestellt, spiegelbildlich aneinanderfügt. Hierbei ergibt sich der zusätzliche Vorteil, dass die Strömung des Lasergases auf beiden Seiten von den Spiegeln weggerichtet ist und eine Verschmutzung der Spiegel durch im Gasstrom mitgeführte Partikel vermieden wird.

Als vorteilhaft hat sich ferner erwiesen, den Laser nach Fig. 6 und 7 in Modulbauweise, z.B. Teile (a), (b) und (c) auszuführen. Aus herstellungstechnischen Gründen ist es zweckmässig, das Antriebsteil mit Laufrad (Teil a) auf der einen Seite, das Endstück mit Umlenkkanal (Teil c) auf der anderen Seite sowie das Zwischenstück (Teil b) mit Kühler und Laserkanal jeweils getrennt zu fertigen und vakuumdicht mit Schrauben zu verbinden.

Damit ergibt sich auch die Möglichkeit, das Zwischenteil b mit Kühler aus einem isolierendem Material herzustellen und das Laserrohr in grosser Länge als Entladungskanal zu nutzen. Eine zweite Möglichkeit besteht darin, nicht das Mittelteil (b) mit Kühler sondern das Endstück (c) mit Umlenkkanal aus einem isolierenden Werkstoff herzustellen.

Das Problem der Isolierung ohne grosse Reduzierung der aktiven Länge des Laserrohres ist ferner auch durch Verwendung von im wesentlichen ringförmigen eventuell unterteilten Zwischenelektroden zu lösen.

**Patentansprüche**

1. Laseranordnung nach dem Gastransport-Prinzip mit schneller longitudinaler Gasströmung, dadurch gekennzeichnet, dass zur Gasumwälzung mindestens ein Gebläserad (1, 13, 14, 19) nach Art der Laufräder von Tangentialgebläsen mit angrenzendem Ringkanal (2, 11, 14, 20) vorgesehen ist, dass in den Ringkanal des Gebläserades mindestens zwei Längsrohre (3, 16, 18, 21, 22) tangential münden und der Ringkanal zwischen den Längsrohren unterbrochen ist und dass der Ringkanal und die Längsrohre eine Kreislaufstrecke für das Lasergas bilden, wobei mindestens ein Längsrohr als Laserresonator ausgebildet ist.

2. Laseranordnung nach Anspruch 1, dadurch gekennzeichnet, dass jeweils zwei parallele Längsrohre (3) die Ringkanäle (2) zweier Gebläseräder (1) tangential miteinander verbinden.

3. Laseranordnung nach Anspruch 1 oder 2, dadurch gekennzeichnet, dass mindestens ein Längsrohr (18, 22) als Kühlstrecke ausgebildet ist.

4. Laseranordnung nach Anspruch 1 oder 2, dadurch gekennzeichnet, dass beide Längsrohre (3) als Laserresonatoren ausgebildet sind und dass zur Koppelung des Strahlengangs in den Längsrohren Umlenkspiegel (7, 8, 9) vorgesehen sind.

5. Laseranordnung nach einem der Ansprüche 1 bis 4, dadurch gekennzeichnet, dass das Gebläserad (1) einen halbringförmigen Querschnitt aufweist und mit radialen Stegen versehen ist.

6. Laseranordnung nach einem der Ansprüche 1 bis 4, dadurch gekennzeichnet, dass als Gebläserad ein Schaufelrad (13, 19) verwendet ist.

7. Laseranordnung nach Anspruch 6, dadurch gekennzeichnet, dass oberhalb und unterhalb des Schaufelrades (13) Seitenringkanalsysteme (14, 15) angeordnet sind, in welche jeweils zwei Längsrohre (16) in zwei Ebenen münden.

8. Laseranordnung nach Anspruch 6, dadurch gekennzeichnet, dass Aussenringkanalsysteme (20) vorgesehen sind, die durch Längsrohre (21, 22) verbunden sind.

9. Laseranordnung nach Anspruch 6, dadurch gekennzeichnet, dass das Schaufelrad (19) in Richtung der Drehachse ausgedehnt ist und dass entsprechend zu breiten Kanälen erweiterte Längsrohre (21, 22) in den Aussenringkanal (20) münden.

10. Laseranordnung nach Anspruch 9, dadurch gekennzeichnet, dass mindestens ein breiter Kanal (21) in Laserrohre unterteilt ist und Umlenkspiegel (23) zur Kopplung der Strahlengänge vorgesehen sind.

11. Laseranordnung nach Anspruch 10, dadurch gekennzeichnet, dass ein breiter Kanal (22) als Kühlstrecke ausgebildet ist.

12. Laseranordnung nach einem der Ansprüche 1 bis 11, dadurch gekennzeichnet, dass zwei Anordnungen in Längsrichtung spiegelbildlich aneinandergefügt sind und die Drehrichtung der Laufräder (19) so gewählt ist, dass die Gasströmung beiderseits von den Laserspiegeln (23) wegführt.

13. Laseranordnung nach den Ansprüchen 9 bis 12, dadurch gekennzeichnet, dass Antriebsteil mit Laufrad (Teil a), Kühlerteil mit Laserrohr (Teil b) und Umlenkteil (Teil c) als getrennte Module vakuumdicht zusammengefügt sind.

14. Laseranordnung nach Anspruch 13, dadurch gekennzeichnet, dass Kühlerteil mit Laserrohr (Teil b) und/oder Umlenkteil (Teil c) aus isolierendem Material bestehen.

**Claims**

1. Laser device operating on a gas transport principle using a rapid longitudinal gas flow, characterised by the fact that for the circulation of gas at least one blower wheel (1, 13, 14, 19) in the form of a tangential impeller blower with adjacent annular channels is provided with at least two longitudinal tubes (3, 16, 18, 21, 22) leading tangentially into the annular channel of the blower wheel, the annular channel being interrupted between the longitudinal tubes, and the annular channel and the longitudinal tubes forming a circuit path for the laser gas, at least one longitudinal tube being constructed as a laser resonator.

2. Laser device in accordance with Claim 1, characterised by the fact that two parallel longitudinal tubes (3) interconnect the annular channels (2) of two blower wheels (1) tangentially.

3. Laser device in accordance with Claim 1 or 2, characterised by the fact that at least one longitudinal tube (18, 22) is constructed as a cooling section.

4. Laser device in accordance with Claim 1 or 2, characterised by the fact that both longitudinal tubes (3) are constructed as laser resonators and that deflecting mirrors (7, 8, 9) are provided for the coupling of the path of the beams in the longitudinal tubes.

5. Laser device in accordance with any one of Claims 1 to 4, characterised by the fact that the blower wheel (1) has a semi-annular cross section and is provided with radial crosspieces.

6. Laser device in accordance with any one of Claims 1 to 4, characterised by the fact that a turbine wheel (13, 19) is used as the blower wheel.

7. Laser device in accordance with Claim 6, characterised by the fact that side annular channel systems (14, 15) into each of which one of two coplanar longitudinal tubes (16) leads, are provided above and below the blade wheel respectively.

8. Laser device in accordance with Claim 6, characterised by the fact that outer annular channel systems (20) are provided which are interconnected by longitudinal tubes (21, 22).

9. Laser device in accordance with Claim 6, characterised by the fact that the turbine wheel (19) is extended in the direction of the rotational axis and that longitudinal tubes (21, 22) flared to form wide channels lead into the outer ring channel (20).

10. Laser device in accordance with Claim 9, characterised by the fact that at least one side channel (21) is subdivided into laser tubes, deflecting mirrors (23) being provided for the coupling of the paths of the beams.

11. Laser device in accordance with Claim 10, characterised by the fact that a wide channel (22) is constructed as a cooling section.

12. Laser device in accordance with any one of Claims 1 to 11, characterised by the fact that two such devices adjoin each other in a specularly symmetrical manner in the longitudinal direction and that the impellers (19) are caused to rotate in such a direction that the flow of gas on both sides proceeds away from the laser mirrors (23).

13. Laser device in accordance with Claims 9 to 12, characterised by the fact that the driving part with impeller (part a), the cooling part with laser tube (part b) and the deflecting part (part c) are joined together in a vacuum-tight manner as separate modules.

14. Laser device in accordance with Claim 13, characterised by the fact that the cooling part with the laser tube (part b) and/or deflecting part (part c) comprises an insulating material.

## Revendications

1. Système à laser selon le principe à circulation de gaz, la circulation du gaz s'effectuant longitudinalement et rapidement, caractérisé en ce qu'on prévoit pour la mise en circulation du gaz au moins une roue de soufflante (1, 13, 14, 19) du type de rotors pour soufflantes tangentielles et un canal contigu (2, 11, 14, 20), en ce que l'on fait déboucher tangentiellement dans le canal annulaire de la roue de soufflante au moins deux tubes longitudinaux (3, 6, 16, 18, 21, 22) et en ce que l'on interrompt le canal annulaire entre les tubes longitudinaux, et en ce que l'on fait en sorte que le canal annulaire et les tubes longitudinaux forment un parcours circulaire pour le gaz du laser, un tube longitudinal au moins étant constitué en tant que résonateur du laser.

2. Système à laser selon la revendication 1, caractérisé en ce que deux tubes longitudinaux parallèles (3) relient tangentiellement l'une à l'autre les canalisations annulaires (2) de deux roues de soufflante (1).

3. Système à laser selon la revendication 1 ou 2, caractérisé en ce qu'un tube longitudinal (18, 22) au moins forme un parcours de refroidissement.

4. Système à laser selon la revendication 1 ou 2, caractérisé en ce que les deux tubes longitudinaux (3) sont constitués sous forme de résonateurs de laser et en ce que des miroirs de renvoi (7, 8, 9) sont prévus dans les tubes longitudinaux pour le couplage des parcours suivis par le rayonnement.

5. Système à laser selon l'une quelconque des revendications 1 à 4, caractérisé en ce que la roue de soufflante (1) a une section transversale en forme de demi-cercle et est munie de cloisons radiales.

6. Système à laser selon l'une quelconque des revendications 1 à 4, caractérisé en ce qu'un rotor (13, 19) est utilisé en tant que roue de soufflante.

7. Système à laser selon la revendication 6, caractérisé en ce que des systèmes de canalisations annulaires latérales (14, 15) sont prévus au-dessus et au-dessous de la roue à aubes (13), dans lesquelles débouchent respectivement deux tubes longitudinaux (16) dans deux plans différents.

8. Système à laser selon la revendication 6, caractérisé en ce que sont prévus des systèmes de canalisations annulaires externes (20) qui sont reliés par des tubes longitudinaux (21, 22).

9. Système à laser selon la revendication 6, caractérisè en ce que la roue à aubes (19) a des dimensions plus importantes en direction de l'axe de rotation et en ce que des tubes longitudinaux (21, 22) de dimensions plus importantes correspondant à celles des canaux débouchent dans le canal annulaire externe (20).

10. Système à laser selon la revendication 9, caractérisé en ce qu'au moins un canal élargi (21) est subdivisé dans les tubes à laser et en ce que des miroirs de renvoi (23) sont prévus pour le couplage des parcours suivis par le rayonnement.

11. Système à laser selon la revendication 10, caractérisé en ce qu'un canal élargi (22) est constitué sous forme d'un parcours de refroidissement.

12. Système à laser selon l'une quelconque des revendications 1 à 11, caractérisé en ce que deux systèmes sont assemblés de façon symétrique en direction longitudinale et en ce que le sens de rotation des rotors (19) est choisi de manière que l'écoulement du gaz soit dévié sur les deux côtés des miroirs (23) du laser.

13. Système à laser selon l'une quelconque des revendications 9 à 12, caractérisé en ce que la partie d'entraînement comprenant le rotor (partie a), la partie de refroidissement comprenant le tube à laser (partie b) et la partie de renvoi (partie c) sont rassemblées de façon étanche au vide en tant que modules séparés.

14. Système à laser selon la revendication 13, caractérisé en ce que la partie de refroidissement comprenant le tube à laser (partie b) et/ou la partie de renvoi (partie c) sont constituées en un matériau isolant.

Fig. 1

Fig. 2

Fig. 3

Fig. 4

Fig. 5

Fig.6

Fig.7

Fig. 8

0 111 044